# EUROPÄISCHE PATENTSCHRIFT

(11) **EP 1 972 806 B1**
(45) Veröffentlichungstag und Bekanntmachung des Hinweises auf die Patenterteilung: **14.07.2010**
(21) Anmeldenummer: 08004637.8
(22) Anmeldetag: 13.03.2008
(51) Int. Cl.: F16C 29/04, F16C 33/46, F16H 19/04, F16H 55/26, B23H 3/00

(54) **Linearwälzlageranordnung**
Linear roller bearing assembly
Palier à roulement linéaire

(30) Priorität: 23.03.2007 DE 102007014614
(43) Veröffentlichungstag der Anmeldung: 24.09.2008
(73) Patentinhaber: AB SKF, 415 50 Göteborg (SE)
(72) Erfinder: Grimm, Thomas, 69257 Wiesenbach (DE); Kern, Arno, 69234 Dielheim (DE); Mayer, Markus, 74858 Breitenbronn (DE); Velde, Henryk, 97440 Werneck (DE)
(74) Vertreter: Kohl, Thomas

(56) Entgegenhaltungen:
- DE-A1- 4 217 663
- JP-A- 61 100 316
- JP-A- 2006 183 821
- US-A- 5 427 454
- US-B1- 6 732 606

## Beschreibung

Die Erfindung betrifft eine Linearwälzlageranordnung.

Beispielsweise aus der DE 198 15 525 A1 ist eine Linearführung in Wälzlagertechnik mit einem zwangsgeführten Käfig bekannt.

Eine Aufgabe der Erfindung ist es, eine gegenüber den aus dem Stand der Technik bekannten Linearwälzlageranordnungen verbesserte Linearwälzlageranordnung zu schaffen.

Die Aufgabe wird durch die Gegenstände der unabhängigen Ansprüche gelöst. Vorteilhafte Ausgestaltungen sind in den Unteransprüchen beschrieben.

Die Erfindung beruht dabei auf der Erkenntnis, dass unter Einsatz eines Verfahrens zum präzisen elektrochemischen Abtragen (auch unter Abkürzung PEM bzw. als Precise Electrochemical Machining bekannt) insbesondere an Präzisionsschienen zahnstangenartige Bereiche für eine Zwangssteuerung für zwischen den Schienen angeordnete Wälzkörper so erzeugt werden können, dass in bis jetzt nicht für möglich gehaltener Art und Weise Vertiefungen besagten Bereichs mit Vorteil mit einer Oberflächenrauhigkeit mit einem Ra-Wert kleiner 0,4 µm und/oder auch Präzisionsschienen mit sehr kleinem Querschnitt, beispielsweise kleiner 50 mm² mit einer Zwangssteuerung ausgebildet werden können. Weiterhin sind dadurch mit besonderem Vorteil höhere Belastbarkeiten der Zwangssteuerung erzielbar, wodurch auch ein Einsatz bei hohen Beschleunigungen zwischen den Schienenteilen eröffnet wird.

Gegenüber normalen Erodierverfahren treten dabei mit Vorteil keine weißen Schichten auf und auch die bei Anwendung des Verfahrens auftretenden Prozesstemperaturcn sind mit Vorteil um bis zu zwei Größenordnungen niedriger. Beim PEM-Verfahren handelt es sich sozusagen um ein reines "elektronisches" Verfahren, d.h. um ein Herauslösen der Elektronen mit anschließendem "Herausfallen" der Atomkeme bei Raumtemperatur. Im Gegensatz zu den weißen Schichten bei normalen Erodierverfahren gibt es keine Auskohlung und auch in der Substruktur gibt es insbesondere bezogen auf Stahlschienenwerkstoffe keine Gebiete der Entkohlung bzw. der Kohlenstoffverarmung.

Weiterhin kann mit Vorteil eine optimierte Verzahnungsgeometrie in die Schienen eingebracht werden. So kann beispielsweise eine Evolventenverzahnung mit dem Vorteil erhöhter Belastbarkeit erzeugt werden. Auch können die in die Schienen eingebrachten Vertiefungen von einer rotationssymmetrischen Form wie bei der DE 198 15 525 A1 abweichen, womit beispielsweise mit Vorteil der nur begrenzt zur Verfugung stehende Raum im Schienengrund besser ausgenutzt wird.

Weitere Vorteile, Merkmale und Einzelheiten der Erfindung ergeben sich aus den im Folgenden beschriebenen Ausführungsbeispielen anhand der Figuren. Dabei zeigen:
- Figur 1: in perspektivischer Ansicht als Ausschnitt eine Präzisionsschienenanordnung in Kreuzrollentechnik mit in einem Käfig angeordneten Kreuzrollen, der ein Zahnrad für ein Verhindern des Käfigwanderns umfasst, wobei die Anordnung im Bereich des Zahnrads teilweise freigeschnitten dargestellt ist,
- Figur 2: ausschnittsweise das Zahnrad und eine Längshälfte der unteren Schiene,
- Figur 3: die Darstellung der Figur 2 als Längsschnitt,
- Figur 4: einen vergrößerten Ausschnitt aus der Figur 3, der in Figur 3 mit X bezeichnet ist, und
- Figur 5: in perspektivischer Ansicht als Ausschnitt eine Präzisionsschicnenanordnung mit zwei zueinander V-förmig angeordneten Nadelrollenreihen, wobei die Nadelrollen in einem Käfig angeordnet sind, der über ein Zahnrad zwangsgeführt ist.

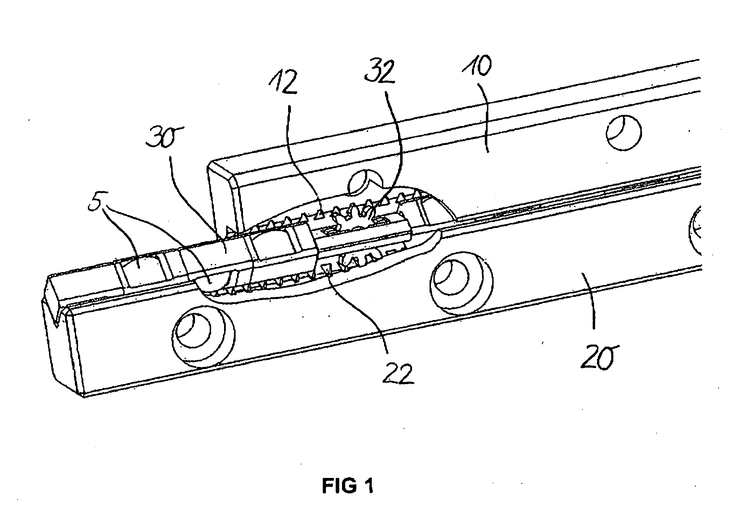

Die Figuren 1 bis 4 zeigen als ein erstes Ausführungsbeispiel der Erfindung eine Präzisionsschienenanordnung in Kreuzrollentechnik. Die Anordnung umfasst dabei eine obere Schiene 10 und eine untere Schiene 20. An der einander zugewandten Seite ist jede der Schienen 10 und 20 mit einer sich längs der Schiene 10 bzw. 20 erstreckenden, im Querschnitt V-förmigen Nut als Abrollbahnen für die Kreuzrollen 5 ausgebildet, wobei die beiden Schenkel der V-Form zueinander einen rechten Winkel bilden. Damit sind die beiden Schienen 10 und 20 über die in den Nuten angeordneten Kreuzrollen 5 gegeneinander in Längsrichtung der Schienen 10 und 20 in an sich bekannter Weise wälzlagertechnisch längsverschieblich.

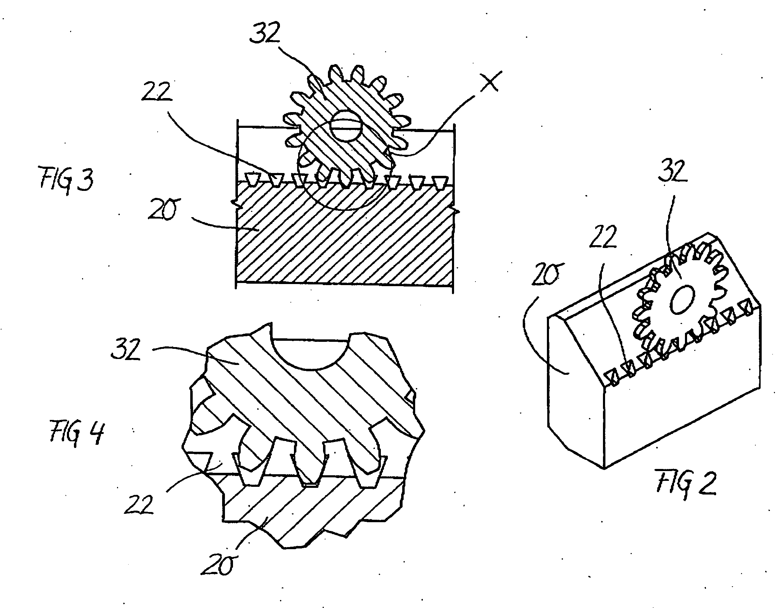

Die Kreuzrollen 5 sind dabei in einem sich längs der Schienen 10 und 20 länglich erstreckenden Käfig 30 angeordnet. In etwa in einer Längsmitte des Käfigs 30 ist ein Zahnrad 32 drehbar gelagert, wobei die Zähne des Zahnrads 32 in zahnstangenartige Bereiche 12 und 22 eingreifen, von denen jeweils einer im Grund der V-Form der jeweiligen Nut der jeweiligen Schiene 10 bzw. 20 ausgebildet ist. Damit ist eine Relativposition des Käfigs 30 in Bezug auf die beiden Schienen 10 und 20 in Abhängigkeit von der Verschiebeposition der beiden Schienen 10 und 20 zueinander eineindeutig definiert; ein sogenanntes Käfigwandern wird somit mit Vorteil verhindert. Zur Verdeutlichung des Zahnrads 32 und der Zahnstangenbereiche 12 und 22 sind die beiden Schienen 10 und 20 in der perspektivischen Ansicht der Figur 1 teilweise freigeschnitten dargestellt. Zur Verdeutlichung zeigt dabei die Figur 2 ausschnittsweise und in Alleinstellung das Zahnrad 32 und eine Längshälfte der unteren Schiene 20 und die Figur 3 die Darstellung der Figur 2 als Längsschnitt. Die Figur 4 zeigt wiederum den in der Figur 3 mit X markierten Bereich in einer Vergrößerung.

Die zahnstangenartigen Bereiche 12 und 22 an den beiden Schienen 10 und 20 sind dabei mit einem Verfahren zum präzisen elektrochemischen Abtragen hergestellt. Damit sind die Bereich 12 und 22 mit besonderem Vorteil, insbesondere deren Vertiefungen zwischen den Zähnen mit einer Oberflächenrauhigkeit mit einem Rₐ-Wert kleiner 0,4 µm, insbesondere kleiner 0,3 µm ausbildbar. Ferner können mit besagtem Verfahren zahnstangenartige Bereiche auch in Schienen mit vergleichsweise geringen Querschnitten, beispielsweise kleiner 50 mm², insbesondere kleiner 35 mm², bezogen auf eine Schiene hergestellt werden, was bisher fertigungstechnisch als nicht ausführbar gehalten wurde. Das Zahnrad 32 und die Zahnstangenbereiche 12 und 22 sind weiterhin gemäß einer Evolventenverzahnung ausgebildet, wobei mit besagtem Verfahren auch die evolventenverzahnte Ausbildung der Zahnstangenbereiche 12 und 22 mit Vorteil einfach und präzise herstellbar ist, wobei ein Vorteil der Evolventenverzahnung eine gegenüber einer Normalverzahnung höhere Belastbarkeit der Verzahnung ist.

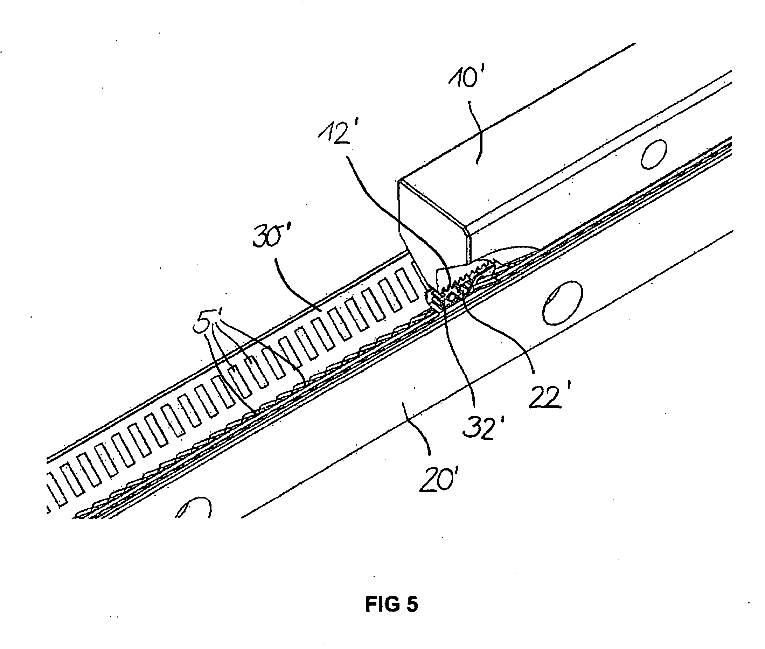

Die Figur 5 zeigt als ein weiteres Ausführungsbeispiel der Erfindung eine weitere Präzisionsschienenanordnung in perspektivischer Ansicht. Die Anordnung umfasst dabei eine obere Schiene 10' mit einem Querschnitt insbesondere kleiner 50 mm² und eine untere Schiene 20' mit einem Querschnitt insbesondere kleiner 35 mm². Die untere Schiene 20' umfasst eine im Querschnitt V-förmige, sich längs der Schiene 20' erstreckende Einbauchung und die obere Schiene 10' eine dazu passend zum Hineingang in die Einbauchung vorgesehene, sich längs der Schiene 10' erstreckende Ausbauchung V-förmigen Querschnitts. Zwischen den einander zugewandten Planflächen der Ein- und Ausbauchung sind zwei Reihen von Nadelrollen 5' angeordnet, so dass die beiden Schienen 10' und 20' über die Nadelrollen 5' gegeneinander in Längsrichtung der Schienen 10' und 20' wälzlagertechnisch längsverschieblich sind.

Die beiden Reihen von Nadelrollen 5' sind dabei in einem gemeinsamen Käfig 30' angeordnet, der im Querschnitt ebenfalls V-förmig ist und sich in Längsrichtung der Schienen 10' und 20' erstreckt. Dabei ist in einem in Längsrichtung mittleren Bereich des Käfigs 30' ein Zahnrad 32' im Käfig 30' drehbar gelagert, dessen Zähne zum Eingreifen in zwei zahnstangenartige Bereiche 12' und 22' vorgesehen sind, wobei der eine zahnstangenartige Bereich 22' sich in Längsrichtung erstreckend am Spitzboden der V-Form der Einbauchung der unteren Schiene 20' und der andere zahnstangenartige Bereich 12' an der Spitze der V-Form der Ausbauchung der oberen Schiene 10' ausgebildet ist.

Zur Verdeutlichung des Zahnrads 32' und der zahnstangenartigen Bereiche sind dabei in der Figur 5 die beiden Schienen 10' und 20' im Bereich des Zahnrads 32' teilweise freigeschnitten dargestellt.

Die Zahnstangenbereiche 12' und 22' sind dabei mit dem zu den Figuren 1 bis 4 beschriebenen Verfahren hergestellt. Dabei wurde bedingt durch die kleinen Querschnitte der Schienen 10' und 20' in Verbindung mit der Nadelrollentechnik aufgrund des sehr geringen für das Zahnrad 32' zur Verfügung stehenden Bauraums, der damit einhergehend sehr filigranen Ausbildung der Zahnstangenbereiche 12' und 22' und damit der vergleichsweise hohen Verzahnungsbelastung bislang eine derartige Käfigzwangsteuerung bei einer derartigen Anordnung für nicht ausführbar gehalten. Ansonsten gilt das vorausgehend zu den Figuren 1 bis 4 Beschriebene entsprechend.

In anderen Ausführungsformen kann das Zahnrad natürlich auch außerhalb dcr Längsmitte des Käfigs angeordnet sein und/oder es können auch mehrere Zahnräder in einem Käfig vorgesehen sein.

In wiederum anderen Ausführungsformen kann die Zwangssteuerung auch ohne Zahnrad in einem Käfig, beispielsweise durch eine zahnradähnliche Ausbildung wenigstens eines Bereichs wenigstens eines der Wälzkörper ausgebildet sein.

## Patentansprüche

1. Lincarwälzlageranordnung, beinhaltend folgende Merkmale:
- Zwei, über wenigstens eine Wälzkörperreihe gegeneinander längsverschicbliche Teile,
- eine Zwangssteuerung der Wälzkörper, umfassend ein zahnradartiges Element zum Eingreifen in einen zahnstangenartig ausgebildeten Bereich an wenigstens einem der Teile, und
- wenigstens Vertiefungen des zahnstangenartigen Bereichs weisen eine Oberflächenrauhigkeit mit einem Ra-Wert kleiner 0,4 µm, insbesondere kleiner gleich 0,3 µm auf.

2. Lincarwätzlageranordnung, beinhaltend folgende Merkmale:
- Zwei, über wenigstens eine Wälzkörperreihe gegeneinander längsverschiebliche Teile,
- eine Zwangssteuerung der Wälzkörper, umfassend ein zahnradartiges Element zum Eingreifen in einen zahnstangenartig ausgebildeten Bereich an wenigstens einem der Teile, und
- Vertiefungen des zahnstangenartigen Bereichs sind durch ein präzises elektrochemisches Abtragen erzeugt.

3. Linearwälzlageranordnung nach einem der Ansprüche 1 oder 2, wobei die beiden Teile schienenartig ausgebildet sind.

4. Linearwälzlageranordnung, beinhaltend folgende Merkmale:
- Zwei, über wenigstens eine Wälzkörperreihe gegeneinander längsverschiebliche schienenartige Teile,
- eine Zwangssteuerung der Wälzkörper, umfassend ein zahnradartiges Element zum Eingreifen in einen zahnstangenartig ausgebildeten Bereich an wenigstens einem der Teile, und
- eine Querschnittsfläche wenigstens des Teils mit dem zahnstangenartigen Bereich ist kleiner gleich 50 mm², insbesondere kleiner gleich 35 mm².

5. Linearwälzlageranordnung nach einem der Ansprüche 1 bis 4, wobei die Zwangssteuerung derart ausgebildet ist, dass in einem Käfig, in dem die Wälzkörper angeordnet sind, das zahnradartige Element drehbar gelagert ist.

6. Lincarwäizlageranordnung nach einem der Ansprüche 1 bis 5, wobei das zahnradartige Element und der zahnstangenartige Bereich gemäß einer Evolventenverzahnung ausgebildet sind.

7. Linearvälzlageranordnung nach einem der Ansprüche 1 bis 6, wobei die Teile zum Abrollen der Wälzkörper jeweils eine, einander zum Gegenüberliegen vorgesehene, längs verlaufende, im Querschnitt V-förmige Nut umfassen.

8. Linearwälzlageranordnung nach einem der Ansprüche 1 bis 6, wobei zum Abrollen der Wälzkörper eines der Teile mit einer im Querschnitt V-förmigen Nut und das andere zum darin Hineinragen mit einer im Querschnitt V-förmigen, sich längs erstreckenden Ausbauchung ausgebildet sind.

9. Lincarwälziageranordnung nach einem der Ansprüche 1 bis 8, wobei die Teile als Präzisionsschienen ausgebildet sind.

10. Linearwälzlageranordnung nach einem der Ansprüche 1 bis 9, wobei die Wälzköpcr in Kreuzrollentechnik ausgebildet sind.

11. Linearwälzlageranordnung nach einem der Ansprüche 1 bis 9, wobei die Wälzkörper als Kugeln ausgebildet sind.

12. Linearwälzlageranordnung nach einem der Ansprüche 1 bis 9, wobei die Wälzkörper in Form zweier, V-förmig zueinander angeordneter Reihen aus Nadeln oder Rollen ausgebildet sind.

13. Linearwälzlageranordnung nach einem der Ansprüche 1 bis 12, wobei das zahnradartige Element an wenigstens einem der Wälzkörper ausgebildet ist.

14. Linearwälzlageranordnung nach einem der Ansprüche 1 bis 13, wobei das zahnradartige Element in den zahnstangenartig ausgebildeten Bereich an dem Teil und gleichzeitig in einen zahnstangenartig ausgebildeten Bereich am anderen Teil zum Eingreifen vorgesehen ist.

## Claims

1. Linear antifriction-bearing arrangement, containing the following features:
- two parts which can be displaced longitudinally with respect to one another via at least one rolling-body row,
- positive control of the rolling bodies, comprising a gearwheel-like element for engaging into a region of rack-like configuration on at least one of the parts, and
- at least depressions of the rack-like region have a surface roughness with an Ra value less than 0.4 µm, in particular less than or equal to 0.3 µm.

2. Linear antifriction-bearing arrangement, containing the following features:
- two parts which can be displaced longitudinally with respect to one another via at least one rolling-body row,
- positive control of the rolling bodies, comprising a gearwheel-like element for engaging into a region of rack-like configuration on at least one of the parts, and
- depressions of the rack-like region are produced by precise electrochemical erosion.

3. Linear antifriction-bearing arrangement according to either of Claims 1 and 2, the two parts being of rail-like configuration.

4. Linear antifriction-bearing arrangement, containing the following features:
- two rail-like parts which can be displaced longitudinally with respect to one another via at least one rolling-body row,
- positive control of the rolling bodies, comprising a gearwheel-like element for engaging into a region of rack-like configuration on at least one of the parts, and
- a cross-sectional area of at least the part with the rack-like region is less than or equal to 50 mm², in particular less than or equal to 35 mm².

5. Linear antifriction-bearing arrangement according to one of Claims 1 to 4, the positive control being configured in such a way that the gearwheel-like element is mounted rotatably in a cage, in which the rolling bodies are arranged.

6. Linear antifriction-bearing arrangement according to one of Claims 1 to 5, the gearwheel-like element and the rack-like region being configured in accordance with an involute toothing system.

7. Linear antifriction-bearing arrangement according to one of Claims 1 to 6, the parts for rolling of the rolling bodies in each case comprising a groove which is provided for lying opposite one another, extends longitudinally and is of V-shaped cross section.

8. Linear antifriction-bearing arrangement according to one of Claims 1 to 6, one of the parts being configured with a groove of V-shaped cross section and the other being configured with a longitudinally extending bulge of V-shaped cross section for protruding into the former, for rolling of the rolling bodies.

9. Linear antifriction-bearing arrangement according to one of Claims 1 to 8, the parts being configured as precision rails.

10. Linear antifriction-bearing arrangement according to one of Claims 1 to 9, the rolling bodies being configured using cross-roller technology.

11. Linear antifriction-bearing arrangement according to one of Claims 1 to 9, the rolling bodies being configured as balls.

12. Linear antifriction-bearing arrangement according to one of Claims 1 to 9, the rolling bodies being configured in the form of two rows of needles or rollers, which rows are arranged in a V-shape with respect to one another.

13. Linear antifriction-bearing arrangement according to one of Claims 1 to 12, the gearwheel-like element being formed on at least one of the rolling bodies.

14. Linear antifriction-bearing arrangement according to one of Claims 1 to 13, the gearwheel-like element being provided for engagement into the region of rack-like configuration on the part and at the same time into a region of rack-like configuration on the other part.

## Revendications

1. Palier à roulement linéaire, présentant les caractéristiques suivantes:
- deux parties mobiles l'une par rapport à l'autre en direction longitudinale au moyen d'au moins une rangée de corps de roulement,
- une commande forcée des corps de roulement, comprenant un élément en forme de roue dentée pour engrener dans une région en forme de crémaillère sur au moins une des parties, et
- au moins des creux de la région en forme de crémaillère présentent une rugosité superficielle avec une valeur Ra inférieure à 0,4 µm, en particulier inférieure ou égale à 0,3 µm.

2. Palier à roulement linéaire, présentant les caractéristiques suivantes:
- deux parties mobiles l'une par rapport à l'autre en direction longitudinale au moyen d'au moins une rangée de corps de roulement,
- une commande forcée des corps de roulement, comprenant un élément en forme de roue dentée pour engrener dans une région en forme de crémaillère sur au moins une des parties, et
- des creux de la région en forme de crémaillère sont produits par enlèvement électrochimique de précision.

3. Palier à roulement linéaire selon l'une quelconque des revendications 1 ou 2, dans lequel les deux parties sont réalisées en forme de rails.

4. Palier à roulement linéaire, présentant les caractéristiques suivantes:
- deux parties mobiles l'une par rapport à l'autre en direction longitudinale au moyen d'au moins une rangée de corps de roulement,
- une commande forcée des corps de roulement, comprenant un élément en forme de roue dentée pour engrener dans une région en forme de crémaillère sur au moins une des parties, et
- une surface de section transversale au moins de la partie portant la région en forme de crémaillère est inférieure ou égale à 50 mm², en particulier inférieure ou égale à 35 mm².

5. Palier à roulement linéaire selon l'une quelconque des revendications 1 à 4, dans lequel la commande forcée est réalisée de telle manière que l'élément en forme de roue dentée soit monté de façon rotative dans une cage, dans laquelle les corps de roulement sont disposés.

6. Palier à roulement linéaire selon l'une quelconque des revendications 1 à 5, dans lequel l'élément en forme de roue dentée et la région en forme de crémaillère se présentent sous la forme d'une denture en développante.

7. Palier à roulement linéaire selon l'une quelconque des revendications 1 à 6, dans lequel les parties comprennent chacune, pour le roulement des corps de roulement, une gorge de section transversale en forme de V, s'étendant longitudinalement, ces gorges étant prévues l'une en face de l'autre.

8. Palier à roulement linéaire selon l'une quelconque des revendications 1 à 6, dans lequel, pour le roulement des corps de roulement, une des parties est réalisée avec une gorge de section transversale en forme de V et l'autre partie est réalisée avec un renflement de section transversale en forme de V, s'étendant longitudinalement, à engager dans la gorge.

9. Palier à roulement linéaire selon l'une quelconque des revendications 1 à 8, dans lequel les parties se présentent sous la forme de rails de précision.

10. Palier à roulement linéaire selon l'une quelconque des revendications 1 à 9, dans lequel les corps de roulement sont réalisés par la technique des rouleaux croisés.

11. Palier à roulement linéaire selon l'une quelconque des revendications 1 à 9, dans lequel les corps de roulement se présentent sous la forme de billes.

12. Palier à roulement linéaire selon l'une quelconque des revendications 1 à 9, dans lequel les corps de roulement se présentent sous la forme de deux rangées d'aiguilles ou de rouleaux disposées en V l'une par rapport à l'autre.

13. Palier à roulement linéaire selon l'une quelconque des revendications 1 à 12, dans lequel l'élément en forme de roue dentée est réalisé sur au moins un des corps de roulement.

14. Palier à roulement linéaire selon l'une quelconque des revendications 1 à 13, dans lequel l'élément en forme de roue dentée est prévu pour engrener dans la région en forme de crémaillère réalisée sur une partie et en même temps dans une région en forme de crémaillère réalisée sur l'autre partie.
